# EUROPÄISCHE PATENTSCHRIFT

(11) **EP 2 636 128 B1**
(45) Veröffentlichungstag und Bekanntmachung des Hinweises auf die Patenterteilung: **30.05.2018**
(21) Anmeldenummer: 11760706.9
(22) Anmeldetag: 19.09.2011
(51) Int. Cl.: H02K 5/15, H02K 5/20, H02K 9/19

(54) **ELEKTROMOTOR, BAUSATZ UND VERFAHREN ZUR HERSTELLUNG**
ELECTRIC MOTOR, ASSEMBLY KIT AND METHOD FOR THE PRODUCTION THEREOF
MOTEUR ÉLECTRIQUE, JEU DE PIÈCES DÉTACHÉES ET PROCÉDÉ DE FABRICATION DUDIT MOTEUR

(30) Priorität: 05.11.2010 DE 102010050348
(43) Veröffentlichungstag der Anmeldung: 11.09.2013
(73) Patentinhaber: Sew-Eurodrive GmbH & Co. KG, 76646 Bruchsal (DE)
(72) Erfinder: DITTES, Gerhard, 75053 Gondelsheim (DE)
(86) Internationale Anmeldenummer: PCT/EP2011/004676
(87) Internationale Veröffentlichungsnummer: WO 2012/059154

(56) Entgegenhaltungen:
- EP-B1- 0 585 644
- DE-A1- 10 005 128
- DE-A1-102007 035 271

## Beschreibung

Die Erfindung betrifft einen Elektromotor, einen Bausatz und ein Verfahren zur Herstellung.

Es ist allgemein bekannt, bei Motoren das Rotorteil über Lager in einem Gehäuseteil zu lagern.

Aus der EP 0 924 839 B1 ist ein Elektromotor mit Mitteln zur Kühlung bekannt.

Aus der EP 0 585 644 B1 ist eine oberflächengekühlte, geschlossene elektrische Maschine bekannt.

Aus der DE 10 2a07 035 271 A1 ist ein Elektromotor mit mäanderförmig verlaufenden Kühlkanälen bekannt.

**Aus der** DE 100 05 128 A1 **ist ein kühlbarer Ständer für eine elektrische Maschine bekannt.**

Der Erfindung liegt daher die Aufgabe zugrunde, eine kostengünstige Herstellung von Motoren zu ermöglichen.

Erfindungsgemäß wird die Aufgabe bei dem Elektromotor nach den in Anspruch 1, bei dem Bausatz nach den in Anspruch 13 und bei dem Verfahren zur Herstellung nach den in Anspruch 15 angegebenen Merkmalen gelöst.

Wichtige Merkmale der Erfindung bei dem Elektromotor sind, dass er ein das Statorblechpaket aufnehmendes Gehäuseteil aufweist, insbesondere ein das Statorblechpaket kraftschlüssig aufnehmendes Gehäuseteil,
wobei ein Flanschteil ein erstes Lager zur Lagerung der Rotorwelle aufnimmt,
wobei zwischen Flanschteil und Gehäuseteil ein Umlenkteil angeordnet ist,
wobei eine Schraubverbindung zwischen Flanschteil und Umlenkteil vorgesehen ist, die ein Gewindeteil umfasst,
wobei eine Schraubverbindung zwischen Umlenkteil und Gehäuseteil vorgesehen ist.

Von Vorteil ist dabei, dass durch die beiden Schraubverbindungen ermöglicht ist, dass das Flanschteil mit einer gleichartigen Schraubverbindung an ein andersartiges Gehäuseteil verbindbar ist und somit in einfacher Weise ein anderer Motor herstellbar ist. Indem also zwei Schraubverbindungen seriell vorgesehen sind, ist innerhalb einer Baureihe eine Schnittstelle zum Flanschteil hin erzeugbar, die innerhalb der Baureihe bei allen Varianten, also Elektromotoren, gleich bleibt. Somit sind Gehäuseteile mit verschiedenen Funktionalitäten mit dem Flanschteil verbindbar.

Das Flanschteil ist an einem ersten axialen, also in Motorachsrichtung gesehenen Endbereich des Umlenkteils verbunden.

Bei einer vorteilhaften Ausgestaltung ist bei der Schraubverbindung zwischen Flanschteil und Umlenkteil eine Schraube vorgesehen, die das Flanschteil berührt, insbesondere mit ihrem Schraubenkopf oder mit einer auf das Schraubgewinde der Schraube aufgeschraubter Mutter, und in das Gewindeteil eingeschraubt ist, insbesondere in ein Innengewinde des Gewindeteils, und das Gewindeteil in das Umlenkteil eingeschraubt ist. Von Vorteil ist dabei, dass einfache und kostengünstige Mittel zum Herstellen der Verbindungen verwendbar sind. Insbesondere durch das Gewindeteil ist eine Schraubverbindung mit dem Flanschteil und eine Schraubverbindung mit dem Umlenkteil ermöglicht.

Bei einer vorteilhaften Ausgestaltung ist bei der Schraubverbindung zwischen Umlenkteil und Gehäuseteil eine Schraube vorgesehen, die das Umlenkteil berührt, insbesondere mit ihrem Schraubenkopf, und in das Gehäuseteil eingeschraubt ist. Von Vorteil ist dabei, dass die Schraube und weitere mechanische Schnittstelle unverändert einsetzbar ist bei Verbindung mit verschiedenen Stator-Gehäuseteilen.

Bei einer vorteilhaften Ausgestaltung ist die Schraube der Schraubverbindung zwischen Umlenkteil und Gehäuseteil in ein Gewinde eingeschraubt, das in die Innenwand einer Ausnehmung eingeschnitten ist, die axial durchgängig durch das Gehäuseteil ist. Von Vorteil ist dabei, dass das Gehäuseteil als Stranggussteil fertigbar ist und somit kein zusätzlicher Aufwand notwendig ist.

Bei einer vorteilhaften Ausgestaltung ist das Gehäuseteil ein Stranggussteil, insbesondere ein nachbearbeitetes Stranggussteil. Von Vorteil ist dabei, dass eine besonders einfache und kostengünstige Fertigung ermöglicht ist.

Bei einer vorteilhaften Ausgestaltung ist eine Dichtung zwischen Umlenkteil und Gehäuseteil angeordnet, insbesondere eine Flachdichtung. Von Vorteil ist dabei, dass das Kühlmedium durchleitbar vom Gehäuseteil zum Flanschteil ist und im Umlenkteil abdichtbar.

Bei einer vorteilhaften Ausgestaltung ist das Gewindeteil eine Gewindebuchse, die ein Innengewinde und ein Außengewinde aufweist. Die Gewindebuchse wird durch einen Innensechskant angezogen. Von Vorteil ist dabei, dass ein einfaches kostengünstiges Teil notwendig ist und somit eine Schnittstelle in der Baureihe zur Verfügung stellbar ist.

Bei einer vorteilhaften Ausgestaltung weist das Gehäuseteil Kühlkanäle auf, insbesondere mehrere in axialer Richtung durchgängig verlaufende Kühlkanäle. Von Vorteil ist dabei, dass eine effektive Kühlung bereit stellbar ist.

Bei einer vorteilhaften Ausgestaltung weist das Umlenkteil Umlenkbereiche, Einlassbereich und/oder Auslassbereich auf für das Kühlmedium,
insbesondere wobei am Umlenkteil eine Anschlussvorrichtung zum Einführen oder Herausführen von Kühlmedium angeordnet ist. Von Vorteil ist dabei, dass die Schnittstelle für die Zuleitung und Ableitung von Kühlmedium im Umlenkteil vorsehbar ist.

Bei einer vorteilhaften Ausgestaltung berührt das Gewindeteil das Flanschteil, insbesondere wobei ein Schraubenkopf oder eine Mutter das Gewindeteil berührt. Von Vorteil ist dabei, dass ein Abstützen des Gewindeteils am Flanschteil in axialer Richtung ausführbar ist.

Bei einer vorteilhaften Ausgestaltung ist ein weiteres, ein die Rotorwelle lagerndes Lager aufnehmendes Flanschteil über eine entsprechende Schraubverbindung mit Gewindeteil mit einem weiteren Umlenkteil verbunden, das zwischen dem weiteren Flanschteil und dem Gehäuseteil angeordnet ist und mittels einer Schraubverbindung mit dem Gehäuseteil verbunden ist. Von Vorteil ist dabei, dass axial beidseitig die Schnittstelle für die Flanschteile innerhalb der Baureihe zur Verfügung stellbar ist.

Bei einer vorteilhaften Ausgestaltung sind alle Ausnehmungen axial durchgängig und es ist ein Umlenkteil als Stranggussteil gefertigt.

Zusätzlich oder alternativ ist zwischen jedem Umlenkteil und mittels Schraubverbindung verbundenem jeweiligem Flanschteil eine Dichtung, insbesondere Flachdichtung, angeordnet ist. Von Vorteil ist dabei, dass ein Begrenzen des Raumbereichs der Umlenkbereiche nicht nur durch das Umlenkteil und das Gehäuseteil sondern auch durch das Flanschteil ausführbar ist. Somit darf die Ausnehmung im Umlenkteil jeweils durchgängig sein.

Wichtige Merkmale bei dem Bausatz zur wahlweisen Herstellung zweier Elektromotoren sind,
dass der erste Elektromotor ein das Statorblechpaket aufnehmendes Gehäuseteil aufweist,
wobei der zweite Elektromotor ein das Statorblechpaket aufnehmendes Gehäuseteil aufweist, das Kühlkanäle aufweist,
wobei der erste Elektromotor ein Gehäuseteil aufweist, an das ein Flanschteil schraubverbunden ist, das ein Lager zur Lagerung der Rotorwelle des zweiten Elektromotors aufweist, wobei eine ins Gehäuseteil eingeschraubte Schraube das Flanschteil berührt, insbesondere und an das Gehäuseteil andrückt,
wobei der zweite Elektromotor ein gleiches, insbesondere identisches, Flanschteil und eine gleiche, insbesondere identische, Schraube aufweist, die das Flanschteil berührt, und in ein Gewindeteil eingeschraubt ist, weiches in ein Umlenkteil eingeschraubt ist, welches mit einem Gehäuseteil des zweiten Elektromotors verbunden ist,
insbesondere wobei die axiale Länge des Gehäuseteils des ersten Motors der axialen Länge gleicht, welche die Einheit, insbesondere Statorgehäuseteil, aufweist, welche gebildet ist aus dem Gehäuseteil des zweiten Motors und den mit dem Gehäuseteil des zweiten Motors schraubverbundenen Umlenkteilen.

Von Vorteil ist dabei, dass aus dem Bausatz mit wenigen Teilen eine hohe Variantenvielfalt innerhalb der Baureihe erzeugbar ist. Denn die Flanschteile sind für alle Varianten gleich.

Wichtige Merkmale bei dem Verfahren zur Herstellung zweier Elektromotoren aus einem Bausatz sind, dass jeweils Flanschteile mit einem Statorgehäuseteil verbunden sind,
wobei wahlweise
- bei Herstellung des ersten Motors das ein Statorblechpaket aufnehmendes Statorgehäuseteil einstückig ausgeführt ist,
bei Herstellung des zweiten Motors das Statorgehäuseteil aus zwei Umlenkteilen und einem das Statorblechpaket aufnehmenden Gehäuseteil zusammengesetzt ist, insbesondere wobei jedes Umlenkteil mittels Schraubverbindungen mit dem Gehäuseteil verbunden ist und zumindest eines der Umlenkteile eine Anschlussvorrichtung für eine Kühlmittelzufuhr oder Kühlmittelabfuhr aufweist.

Von Vorteil ist dabei, dass wiederum mit geringem Teileaufwand verschieden funktionale Motoren, also Varianten der Baureihe erzeugbar sind.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:

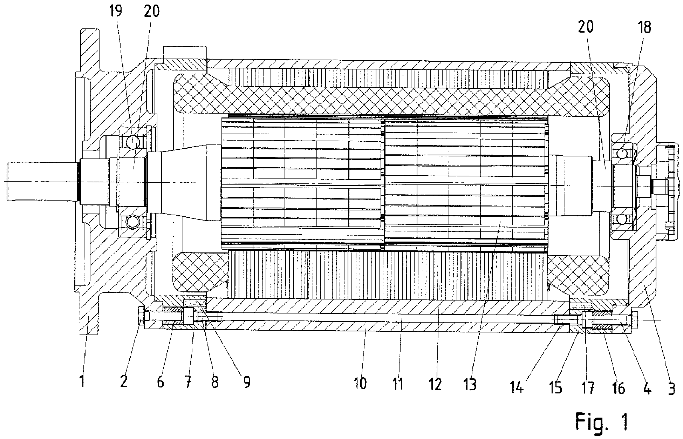

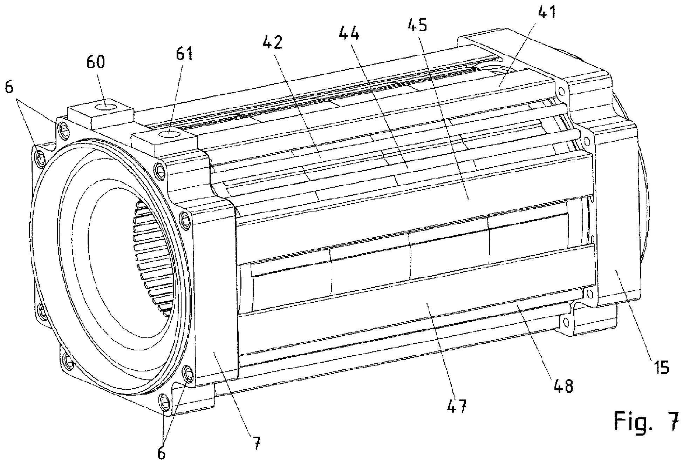

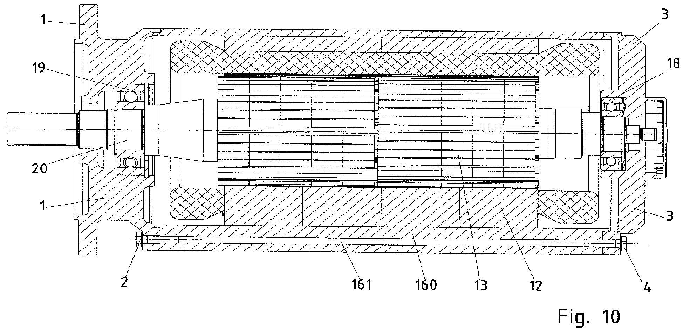

Die Figuren 1 bis 9 beziehen sich auf eine erste Motorvariante einer Baureihe, die mit einem Kühlmedium kühlbar ist. Die Figur 10 bezieht sich hingegen auf eine Motorvariante der Baureihe, die nicht mittels eines Kühlmediums kühlbar ist. Somit ist aus einem Bausatz, weicher möglichst wenig Teile umfasst wahlweise entweder die erste oder zweite Variante herstellbar.
In der Figur 1 ist ein Schnitt durch einen mit einem Kühlmedium kühlbaren Elektromotor mit Umlenkteilen (15) gezeigt.
In der Figur 2 ist ein vergrößerter Ausschnitt zur Figur 1 gezeigt.
In der Figur 3 ist ein Umlenkteil 15 in Schrägansicht gezeigt.
In der Figur 4 sind die Kühlkanäle und Umlenkberieche sowie Ein- und Auslassbereiche des Kühlmediums gezeigt, wobei Pfeile die wesentliche Flussrichtung andeuten.
In der Figur 5 ist ein Stator des mit dem Kühlmedium kühlbaren Elektromotors gezeigt, der wahlweise ersetzbar ist durch einen Stator mit Gehäuseteil 160 gemäß Figur 10. Je nach Wahl eines dieser beiden Statoren ist ein Elektromotor mit oder ohne durchs Kühlmedium bewirkbare Kühlung herstellbar.
In der Figur 6 ist eine zur Figur 5 gehörige Schrägansicht gezeigt.
In Figur 7 ist beim Ausführungsbeispiel nach Figur 6 das Gehäuseteil 10 weggenommen, so dass die Kühlkanalbereiche für das Kühlmedium sichtbar sind.
In Figur 8 ist das Gehäuseteil 10 in Schrägansicht dargestellt.
In Figur 9 ist das Umlenkteil 7 in Schrägansicht dargestellt.
In der Figur 10 ist ein nicht mit dem Kühlmedium gekühlter Elektromotor gezeigt, wobei die Flanschteile und zugehörige Verbindungsschrauben dieselben sind wie bei Figur 1. Somit ist die Mehrfache Verwendung des Flanschteils und der Verbindungsschrauben ersichtlich.

Wie in den Figuren 1 bis 9 gezeigt ist bei der Motorvariante, bei der eine Kühlung mit Kühlmedium erreichbar ist, ein Flanschteil 1 vorgesehen, das auch bei der Motorvariante nach Figur 10, also ohne Kühlung durch ein Kühlmedium, vorgesehen ist.

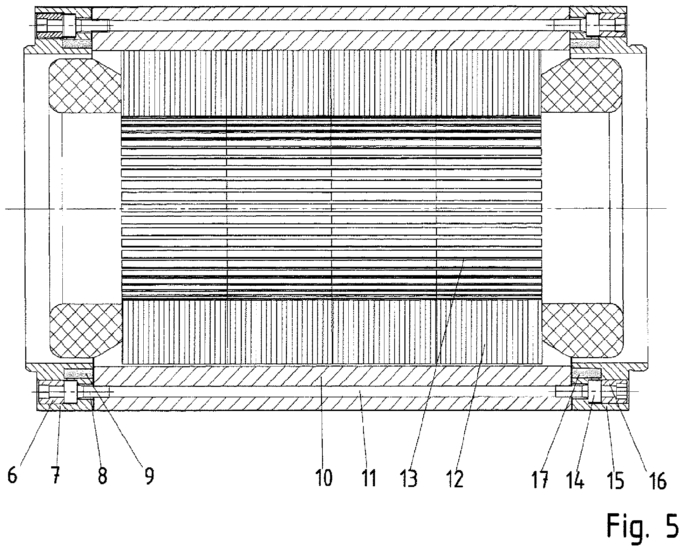

Somit umfasst der Bausatz einen Stator nach Figur 5, der aus einem Gehäuseteil 10 und den Umlenkteilen 7 und 15 zusammengesetzt ist, und einen in Figur 10 ersichtlichen Stator. Außerdem umfasst der Bausatz ein A-seitiges und ein B-seitiges Flanschteil (1, 3) sowie zugehörige Verbindungsmittel,

Die mechanische Schnittstelle am jeweiligen Flanschteil zum Stator hin ist stets gleich, so dass das jeweilige Flanschteil an beide Statoren verbindbar ist.

Auf diese Weise ist also mit einer geringen Teilezahl eine hohe Varianz der in der Baureihe herstellbaren Varianten, also Motoren erreichbar.

Gemäß Figur 1 ist sind auf einer Rotorwelle 20 Permanentmagnete 13 angeordnet und somit der Motor als Synchronmotor ausgeführt. Alternativ oder zusätzlich ist auf der Rotorwelle auch ein Kurzschlusskäfig vorsehbar zur Ausführung als Asynchronmotor oder LSPM-Motor.

Die Rotorwelle 20 ist mittels des Lagers 19 im Flanschteil 1 gelagert und mittels des Lagers 18 im Flanschteil 3 gelagert.

Das Statorblechpaket 12 ist beispielhaft stanzpaketiert und kraftschlüssig im Gehäuseteil 10 eingefügt. Im Statorblechpaket 12 ist die Statorwicklung aufgenommen. Die Umlenkbereiche der Statorwicklung ragen in die axialen Bereiche hinein, welche auch von den Umlenkteilen (7, 15) überdeckt sind.

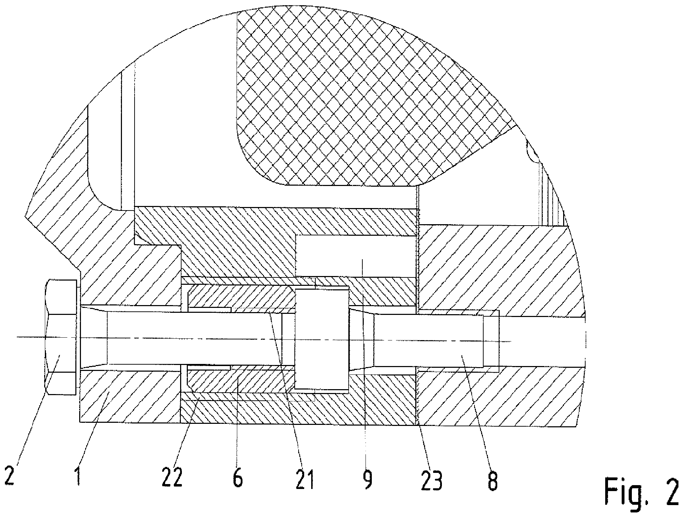

Eine Verbindungsschraube 2, insbesondere wie in Figur 2 gezeigt, ist durch eine Bohrung des Flanschteiles 1 hindurchgeführt und in ein Innengewinde 21 einer Gewindebuchse 6 eingeschraubt, deren Außengewinde 22 in einer Gewindebohrung des Umlenkteils 7 eingeschraubt ist.

Zur Aufnahme der Gewindebuchse 6 im Umlenkteil 7 weist dieses eine gestufte Bohrung auf, so dass die Gewindebuchse in demjenigen Bereich der gestuften Bohrung, welcher einen größeren Innendurchmesser aufweist, aufnehmbar ist. Durch den Bereich der gestuften Bohrung mit kleinerem Innendurchmesser ist eine Verbindungsschraube 8 geführt, wobei deren Schraubenkopf im Bereich größeren Innendurchmessers der gestuften Bohrung angeordnet ist und einen größeren Durchmesser aufweist als der Innendurchmesser im Bereich der gestuften Bohrung mit kleineren Innendurchmesser. Die Schraube 8 ist mir ihrem Gewinde in eine Gewindebohrung des Gehäuseteils 10 eingeschraubt.

Die Gewindebohrung ist hierbei in einer Ausnehmung 11 eingebracht, die axial langgestreckt ausgeführt ist, da das Gehäuseteil 10 als Stranggussteil, insbesondere Aluminium-Stranggussteil, hergestellt ist und somit die Ausnehmung 11 in axialer Richtung durchgängig ist.

B-seitig ist eine entsprechende Schnittstelle geschaffen, indem das Flanschteil 3 mittels der Verbindungsschraube 4 in eine Gewindebuchse 16 eingeschraubt ist und diese wiederum mit ihrem Außengewinde in den Bereich mit größerem Innendurchmesser einer gestuften Bohrung im Umlenkteil 15 eingeschraubt ist. Ebenso ist auch eine Verbindungsschraube 14 vorgesehen, mit der das Umlenkteil 15 verschraubt ist mit dem Gehäuseteil 10 zur Bildung eines Stator-Gehäuseteils. Dabei ist auch die Verbindungsschraube 14 in ein Gewinde eingeschraubt, welches in der Ausnehmung 11 des Gehäuseteils 10 durchgängig ausgeführt ist. Der Schraubenkopf der Verbindungsschraube 14 weist ebenfalls einen größeren Durchmesser auf als der Innendurchmesser desjenigen Bereiches der gestuften Bohrung beträgt, welcher einen kleineren Durchmesser aufweist, also im Stufenbereich mit kleinerem Durchmesser vorgesehen ist.

Mittels der Schraubverbindung zwischen Umlenkteil 7 und Gehäuseteil 10 und entsprechender Schraubverbindung zwischen dem weiteren Umlenkteil 15 und Gehäuseteil 10 ist somit ein dreistückig ausgeführtes Statorgehäuseteil hergestellt.

Zur Herstellung des Elektromotors, also einer Variante der Baureihe, wird nun entweder dieses dreistückig ausgeführte Statorgehäuseteil oder alternativ das einstückige Statorgehäuseteil 160 mit der zur Ausnehmung 11 korrespondierenden Ausnehmung 161 gewählt. In jedem Fall sind die Flanschteile (1, 3) mit ihren zugehörigen Verbindungsschrauben 2 beziehungsweise 4 an die Statorgehäuseteile angeschraubt.

Das Kühlmedium 9 in einem Umlenkbereich des Umlenkteils 7 ist in Figur 1 angedeutet. Zwischen den Umlenkteilen (7, 15) und dem Gehäuseteil 10 ist jeweils eine Dichtung 23 vorgesehen, die vorzugsweise als Flachdichtung ausgeführt ist.

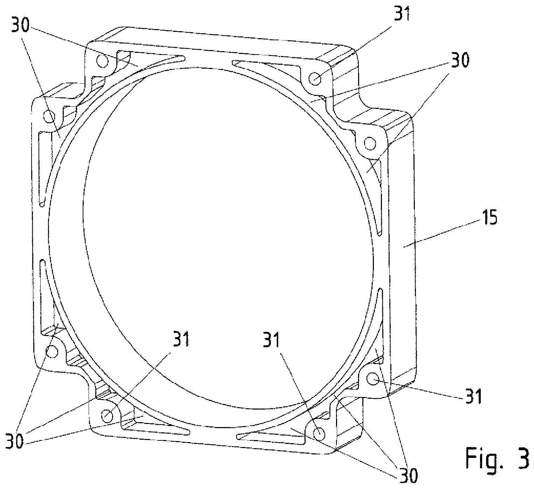

In Figur 3 ist das Umlenkteil 15 näher dargestellt, wobei die Bohrungen 31 zur Aufnahme der Gewindebuchse 16 näher dargestellt sind. Außerdem sind Umlenkbereiche 30 gezeigt, in welche jeweils eingehende und ausgehende Kühlkanäle münden.

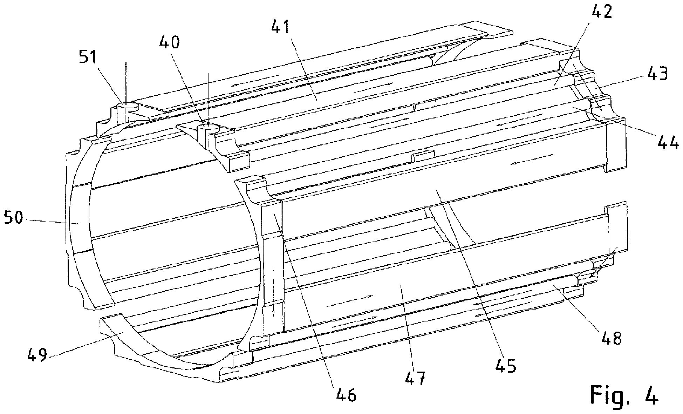

In der Figur 4 ist das Kühlmedium beziehungsweise die das Kühlmedium führenden Bereiche gezeigt.

Durch den Einlass 40 für Kühlmedium, insbesondere Gas oder Flüssigkeit, insbesondere Öl oder Wasser, gelangt das Kühlmedium in einen ersten Einlassbereich aus dem ein breiter Kühlkanal 41 und ein schmaler runder Kühlkanal 42 herausgehen. Diese münden an der axial gegenüberliegenden Seite des Stators in einen Umlenkbereich 43, aus welchem wiederum ein breiter Kühlkanal 45 und ein schmaler runder Kühlkanal 44 herausführen - allerdings in axial entgegengesetzter Richtung.

Entsprechend münden diese Kanäle wiederum in einem Umlenkbereich 46, aus dem wiederum ein breiter Kühlkanal 47 und ein schmaler Kühlkanal herausführen und über einen Umlenkbereich am anderen axialen Ende umgelenkt werden.

Die Kühlkanäle sind im Beriech des Gehäuseteils 10, das als Stranggussteil ausgeführt ist, durchgängig ausgeführt.

Somit wird das Kühlmedium in axialer Richtung und Umfangsrichtung mäanderförmig geführt, wobei es in axialer Richtung hin- und hergeführt wird.

Weitere in Figur 4 sichtbare Umlenkbereiche sind Umlenkbereich 49 und 50.

Schließlich wird das Kühlmedium im Bereich des Auslasses 51 herausgeführt.

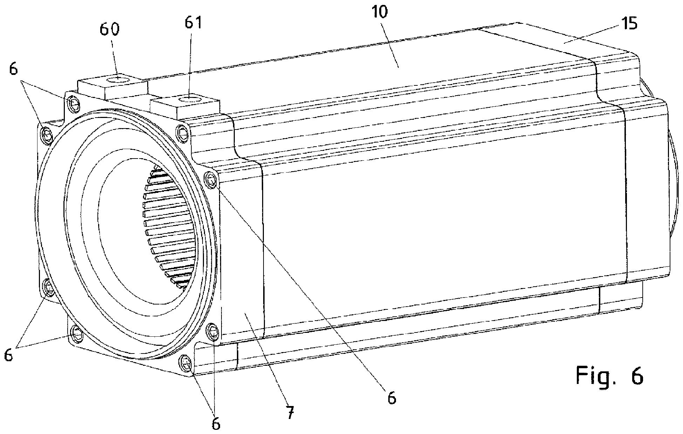

Die Anschlussbereiche (60, 61) für Auslass und Einlass des Kühlmediums am Umlenkteil 7 sind in Figur 6 gezeigt.

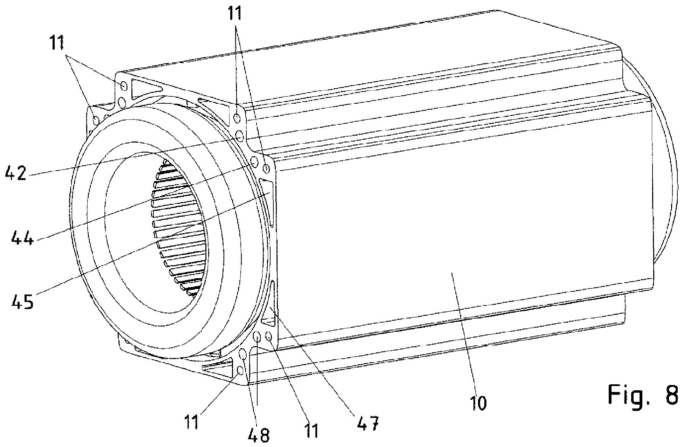

In Figur 8 ist das Gehäuseteil mit Stator gezeigt, wobei es als Stranggussprofil gefertigt ist und nach dem Strangguss-Fertigen nachbearbeitet wird, um die Schnittstelle zu den Flanschteilen mit einem Zentrierabschnitt auszugestalten. Die Ausnehmungen (11, 42, 44, 45) werden beim Stranggussziehen vorgesehen und erstrecken sich somit über die ganze axiale Länge des Stranggussprofils.

Die Umlenkteile (7,15) werden nur durch die Befestigungsschrauben (8, 14) zum Gehäuse 10 zentriert und ausgerichtet. Ein runder Zentriersitz ist an den Flanschteilen (1, 3) zur Verbindung mit den Umlenkteilen (7, 15) vorgesehen.

Statt der Befestigungsschrauben (8, 14) sidn bei anderen Ausführungsbeispielen auch zusätzliche Passstifte verwendbar.

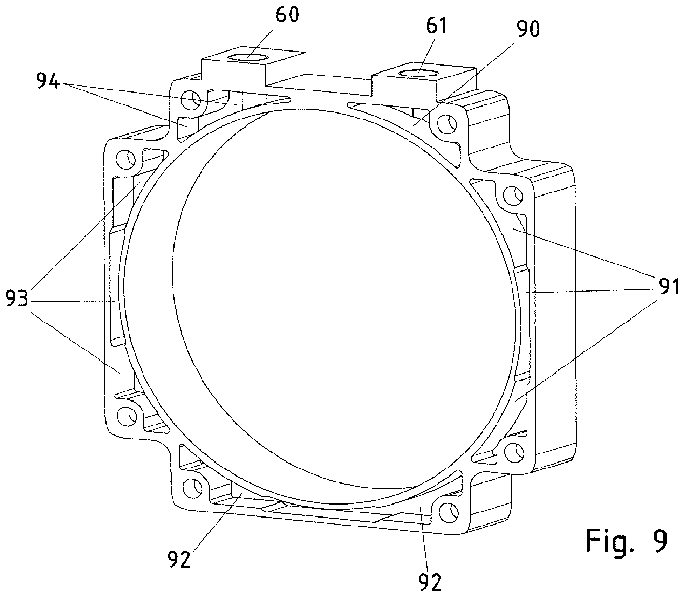

In Figur 9 sind die Ausnehmungen des Umlenkteils 7 gezeigt, welche korrespondierend zu den genannten Umlenkbereichen sowie Einlassbereichen und Auslassbereichen vorgesehen sind.

Somit ist also ein Elektromotor aus dem beschriebenen Bausatz von Teilen herstellbar, wobei wahlweise ein Elektromotor nach Figur 1 oder ein Elektromotor nach Figur 10 herstellbar ist. Dabei ist der erstgenannte Motor mit einem Kühlmedium, also Flüssigkeit oder Gas, kühlbar. Der andere Motor hingegen kann nur Wärme an die umgebende Luft abgeben über seine Gehäuseteile, insbesondere Statorgehäuseteil 10. Somit sind mit wenigen Bauteilen verschieden Varianten herstellbar.

In weiteren erfindungsgemäßen Ausführungsbeispielen sind die Kühlkanalquerschnitte anders geformt als die dargestellten Kühlkanalquerschnitte. Insbeosndere unterscheiden sie sich in Form, Anzahl und Ordnung von den Darstellungen in den genannten Figuren.

### Bezugszeichenliste

- 1: Flanschteil
- 2: Verbindungsschraube
- 3: Flanschteil
- 4: Verbindungsschraube
- 6: Gewindebuchse
- 7: Umlenkteil
- 8: Verbindungsschraube
- 9: Kühlmedium
- 10: Gehäuseteil
- 11: Ausnehmung
- 12: Statorblechpaket
- 13: Dauermagnete
- 14: Verbindungsschraube
- 15: zweites Umlenkteil
- 16: Gewindebuchse
- 17: Kühlmedium
- 18: Lager
- 19: Lager
- 20: Rotorwelle
- 21: Innengewinde der Gewindebuchse 6
- 22: Außengewinde der Gewindebuchse 6
- 23: Dichtung, insbesondere Flachdichtung
- 30: Umlenkbereich
- 31: Bohrung für Verbindungsschraube 14
- 40: Einlass für Kühlmedium
- 41: breiter Kühlkanal
- 42: schmaler runder Kühlkanal
- 43: Umlenkbereich
- 44: schmaler Kühlkanal
- 45: breiter Kühlkanal
- 46: Umlenkbereich
- 47: breiter Kühlkanal
- 48: schmaler Kühlkanal
- 49: Umlenkbereich
- 50: Umlenkbereich
- 51: Auslass für Kühlmedium
- 60: Anschlussbereich für Auslass des Kühlmediums
- 61: Anschlussbereich für Einlass des Kühlmediums
- 90: Einlassbereich
- 91: Umlenkbereich
- 92: Umlenkbereich
- 93: Umlenkbereich
- 94: Umlenkbereich
- 160: Gehäuseteil
- 161: Ausnehmung

## Patentansprüche

1. Elektromotor,
aufweisend ein das Statorblechpaket (12) aufnehmendes Gehäuseteil, insbesondere ein das Statorblechpaket (12) kraftschlüssig aufnehmendes Gehäuseteil,
wobei ein Flanschteil (1, 3) ein erstes Lager (18, 19) zur Lagerung der Rotorwelle (20) aufnimmt,
**dadurch gekennzeichnet, dass**
zwischen Flanschteil (1, 3) und Gehäuseteil ein Umlenkteil (7) **zur Umlenkung eines Kühlmittelstromes** angeordnet ist,
wobei eine Schraubverbindung zwischen Flanschteil (1, 3) und Umlenkteil (7) vorgesehen ist, die ein Gewindeteil umfasst,
wobei eine Schraubverbindung zwischen Umlenkteil (7) und Gehäuseteil vorgesehen ist.

2. Elektromotor nach Anspruch 1,
**dadurch gekennzeichnet, dass**
bei der Schraubverbindung zwischen Flanschteil (1, 3) und Umlenkteil (7) eine Schraube vorgesehen ist, die das Flanschteil (1, 3) berührt, insbesondere mit ihrem Schraubenkopf oder mit einer auf das Schraubgewinde der Schraube aufgeschraubter Mutter, und in das Gewindeteil eingeschraubt ist, insbesondere in ein Innengewinde (21) des Gewindeteils, und das Gewindeteil in das Umlenkteil (7) eingeschraubt ist.

3. Elektromotor nach mindestens einem der vorangegangenen Ansprüche,
**dadurch gekennzeichnet, dass**
bei der Schraubverbindung zwischen Umlenkteil (7) und Gehäuseteil eine Schraube vorgesehen ist, die das Umlenkteil (7) berührt, insbesondere mit ihrem Schraubenkopf, und in das Gehäuseteil eingeschraubt ist.

4. Elektromotor nach mindestens einem der vorangegangenen Ansprüche,
**dadurch gekennzeichnet, dass**
die Schraube der Schraubverbindung zwischen Umlenkteil (7) und Gehäuseteil in ein Gewinde eingeschraubt ist, das in die Innenwand einer Ausnehmung (11, 161) eingeschnitten ist, die axial durchgängig durch das Gehäuseteil ist.

5. Elektromotor nach mindestens einem der vorangegangenen Ansprüche,
**dadurch gekennzeichnet, dass**
das Gehäuseteil ein Stranggussteil ist, insbesondere ein nachbearbeitetes Stranggussteil.

6. Elektromotor nach mindestens einem der vorangegangenen Ansprüche,
**dadurch gekennzeichnet, dass**
eine Dichtung (23) zwischen Umlenkteil (7) und Gehäuseteil angeordnet ist, insbesondere eine Flachdichtung.

7. Elektromotor nach mindestens einem der vorangegangenen Ansprüche,
**dadurch gekennzeichnet, dass**
das Gewindeteil eine Gewindebuchse (6, 16) ist, die ein Innengewinde (21) und ein Außengewinde (22) aufweist,
insbesondere wobei die Gewindebuchse (6, 16) eine Schnittstelle zum Ansetzen eines Werkzeugs aufweist, so dass ein Anziehen ermöglicht ist,
insbesondere wobei die Schnittstelle ein Innensechskant ist.

8. Elektromotor nach mindestens einem der vorangegangenen Ansprüche,
**dadurch gekennzeichnet, dass**
das Gehäuseteil Kühlkanäle aufweist, insbesondere mehrere in axialer Richtung durchgängig verlaufende Kühlkanäle.

9. Elektromotor nach mindestens einem der vorangegangenen Ansprüche,
**dadurch gekennzeichnet, dass**
das Umlenkteil (7) Umlenkbereiche (30, 43, 46, 49, 50, 91, 92, 93, 94), Einlassbereich (90) und/oder Auslassbereich (51) aufweist für das Kühlmedium (9, 17),
insbesondere wobei am Umlenkteil (7) eine Anschlussvorrichtung zum Einführen oder Herausführen von Kühlmedium (9, 17) angeordnet ist.

10. Elektromotor nach mindestens einem der vorangegangenen Ansprüche,
**dadurch gekennzeichnet, dass**
das Gewindeteil das Flanschteil (1, 3) berührt, insbesondere wobei ein Schraubenkopf oder eine Mutter das Gewindeteil berührt.

11. Elektromotor nach mindestens einem der vorangegangenen Ansprüche,
**dadurch gekennzeichnet, dass**
ein weiteres, ein die Rotorwelle (20) lagerndes Lager (18, 19) aufnehmendes Flanschteil (1, 3) über eine entsprechende Schraubverbindung mit Gewindeteil mit einem weiteren Umlenkteil (15) verbunden ist, das zwischen dem weiteren Flanschteil (1, 3) und dem Gehäuseteil angeordnet ist und mittels einer Schraubverbindung mit dem Gehäuseteil verbunden ist.

12. Elektromotor nach mindestens einem der vorangegangenen Ansprüche,
**dadurch gekennzeichnet, dass**
ein Umlenkteil (7) als Strangguss gefertigt ist, insbesondere so dass alle Ausnehmungen (11, 161) axial durchgängig sind,
und/oder dass zwischen jedem Umlenkteil (7, 15) und mittels Schraubverbindung verbundenem jeweiligem Flanschteil (1, 3) eine Dichtung (23), insbesondere Flachdichtung angeordnet ist.

13. Bausatz zur wahlweisen Herstellung zweier Elektromotoren,
wobei der erste Elektromotor ein das Statorblechpaket (12) aufnehmendes Gehäuseteil aufweist,
wobei der zweite Elektromotor ein Elektromotor nach einem der vorangegangenen Ansprüche ist, der ein das Statorblechpaket (12) aufnehmendes Gehäuseteil aufweist, das Kühlkanäle aufweist,
**dadurch gekennzeichnet, dass**
der erste Elektromotor ein Gehäuseteil aufweist, an das ein Flanschteil (1, 3) schraubverbunden ist, das ein Lager (18, 19) zur Lagerung der Rotorwelle (20) des zweiten Elektromotors aufweist, wobei eine ins Gehäuseteil eingeschraubte Schraube das Flanschteil (1, 3) berührt, insbesondere und an das Gehäuseteil andrückt,
wobei der zweite Elektromotor ein gleiches, insbesondere identisches, Flanschteil (1, 3) und eine gleiche, insbesondere identische, Schraube aufweist, die das Flanschteil (1, 3) berührt, und in ein Gewindeteil eingeschraubt ist, weiches in ein Umlenkteil (7) zur Umlenkung eines Külmittelstromes eingeschraubt ist, welches mit einem Gehäuseteil des zweiten Elektromotors verbunden ist,
insbesondere wobei die axiale Länge des Gehäuseteils des ersten Motors der axialen Länge gleicht, welche die Einheit, insbesondere Statorgehäuseteil, aufweist, welche gebildet ist aus dem Gehäuseteil des zweiten Motors und den mit dem Gehäuseteil des zweiten Motors schraubverbundenen Umlenkteilen (7, 15).

14. Bausatz nach Anspruch 13,
**dadurch gekennzeichnet, dass**
das Gehäuseteil des ersten und zweiten Motors aus dem gleichen Stranggussprofil gefertigt sind, insbesondere denselben Querschnitt aufweisen.

15. Verfahren zur Herstellung zweier Elektromotoren aus einem Bausatz nach Anspruch 13, wobei jeweils Flanschteile (1,3) mit einem Statorgehäuseteil verbunden sind,
**dadurch gekennzeichnet, dass**
wahlweise
- bei Herstellung des ersten Motors ein Statorblechpaket (12) aufnehmendes Statorgehäuseteil einstückig ausgeführt ist,
- bei Herstellung des zweiten Motors das Statorgehäuseteil aus zwei Umlenkteilen (7, 15) zur Umlenkung eines Kühlmittelstromes und einem das Statorblechpaket (12) aufnehmenden Gehäuseteil zusammengesetzt ist, insbesondere wobei jedes Umlenkteil (7, 15) mittels Schraubverbindungen mit dem Gehäuseteil verbunden ist und zumindest eines der Umlenkteile (7, 15) eine Anschlussvorrichtung für eine Kühlmittelzufuhr oder Kühlmittelabfuhr aufweist.

## Claims

1. An electric motor,
having a housing part which receives the laminated stator core (12), in particular a housing part which receives the laminated stator core (12) in non-positive manner,
wherein a flange part (1, 3) receives a first bearing (18, 19) for mounting the rotor shaft (20),
**characterised in that**
a deflecting part (7) for deflecting a coolant stream is arranged between the flange part (1, 3) and housing part,
with a screw connection which comprises a threaded part being provided between the flange part (1,3) and deflecting part (7),
with a screw connection being provided between the deflecting part (7) and housing part.

2. An electric motor according to Claim 1,
**characterised in that**
in the screw connection between the flange part (1, 3) and deflecting part (7) there is provided a screw which contacts the flange part (1,3), in particular with its screw head or with a nut which is screwed onto the screw thread of the screw, and is screwed into the threaded part, in particular into an internal thread (21) of the threaded part, and the threaded part is screwed into the deflecting part (7).

3. An electric motor according to at least one of the preceding claims,
**characterised in that**
in the screw connection between the deflecting part (7) and housing part there is provided a screw which contacts the deflecting part (7), in particular with its screw head, and is screwed into the housing part.

4. An electric motor according to at least one of the preceding claims,
**characterised in that**
the screw of the screw connection between the deflecting part (7) and housing part is screwed into a thread which is cut into the inner wall of a cutout (11, 161) which is axially continuous through the housing part.

5. An electric motor according to at least one of the preceding claims,
**characterised in that**
the housing part is a continuously-cast part, in particular a reworked continuously-cast part.

6. An electric motor according to at least one of the preceding claims,
**characterised in that**
a seal (23) is arranged between the deflecting part (7) and housing part, in particular a flat seal.

7. An electric motor according to at least one of the preceding claims,
**characterised in that**
the threaded part is a threaded bush (6, 16) which has an internal thread (21) and an external thread (22),
in particular with the threaded bush (6, 16) having an interface for fitting a tool, so that tightening is made possible,
in particular the interface being a hexagon socket head.

8. An electric motor according to at least one of the preceding claims,
**characterised in that**
the housing part has cooling ducts, in particular a plurality of cooling ducts running continuously in the axial direction.

9. An electric motor according to at least one of the preceding claims,
**characterised in that**
the deflecting part (7) has deflecting regions (30, 43, 46, 49, 50, 91, 92, 93, 94), an inlet region (90) and/or outlet region (51) for the cooling medium (9, 17),
in particular with a connection means for introducing or removing cooling medium (9, 17) being arranged on the deflecting part (7).

10. An electric motor according to at least one of the preceding claims,
**characterised in that**
the threaded part contacts the flange part (1, 3), in particular with a screw head or a nut contacting the threaded part.

11. An electric motor according to at least one of the preceding claims,
**characterised in that**
a further flange part (1,3) which receives a bearing (18, 19) mounting the rotor shaft (20) is connected via a corresponding screw connection with threaded part to a further deflecting part (15) which is arranged between the further flange part (1, 3) and the housing part and is connected to the housing part by means of a screw connection.

12. An electric motor according to at least one of the preceding claims,
**characterised in that**
one deflecting part (7) is manufactured as a continuous casting, in particular so that all the cutouts (11, 161) are axially continuous,
and/or **in that** a seal (23), in particular flat seal, is arranged between each deflecting part (7, 15) and respective flange part (1,3) connected by means of a screw connection.

13. An assembly kit for alternatively producing two electric motors,
wherein the first electric motor has a housing part which receives the laminated stator core (12),
wherein the second electric motor is an electric motor according to one of the preceding claims, which has a housing part which receives the laminated stator core (12) and which has cooling ducts,
**characterised in that**
the first electric motor has a housing part to which is screw-connected a flange part (1, 3) which has a bearing (18, 19) for mounting the rotor shaft (20) of the second electric motor, with a screw which is screwed into the housing part contacting the flange part (1, 3), in particular and pressing it against the housing part,
the second electric motor having a like, in particular identical, flange part (1, 3) and a like, in particular identical, screw which contacts the flange part (1,3),
and is screwed into a threaded part which is screwed into a deflecting part (7) for deflecting a coolant stream,
which is connected to a housing part of the second electric motor,
in particular with the axial length of the housing part of the first motor being identical to the axial length of the unit, in particular stator housing part, which is formed from the housing part of the second motor and the deflecting parts (7, 15) which are screw-connected to the housing part of the second motor.

14. An assembly kit according to Claim 13,
**characterised in that**
the housing part of the first and second motor are [sic] manufactured from the like continuously-cast section, in particular have the same cross-section.

15. A method for producing two electric motors from an assembly kit according to Claim 13,
wherein in each case flange parts (1, 3) are connected to a stator housing part,
**characterised in that**
alternatively
- when producing the first motor, a stator housing part receiving [a] laminated stator core (12) is configured in one piece,
- when producing the second motor, the stator housing part is composed of two deflecting parts (7, 15) for deflecting a coolant stream and a housing part which receives the laminated stator core (12), in particular with each deflecting part (7, 15) being connected to the housing part by means of screw connections and at least one of the deflecting parts (7, 15) being a connection means for supplying or removing coolant.

## Revendications

1. Moteur électrique,
présentant une partie carter recevant l'empilage de tôles de stator (12), en particulier une partie carter recevant à force l'empilage de tôles de stator (12),
sachant qu'une partie bride (1, 3) reçoit un premier palier (18, 19) pour le montage de l'arbre de rotor (20),
**caractérisé en ce qu'**une partie déflectrice (7) est disposée entre la partie bride (1, 3) et la partie carter afin de dévier un flux de réfrigérant,
sachant qu'une liaison par vissage, qui comprend une pièce filetée, est prévue entre la partie bride (1, 3) et la partie déflectrice (7),
sachant qu'une liaison par vissage est prévue entre la partie déflectrice (7) et la partie carter.

2. Moteur électrique selon la revendication 1, **caractérisé en ce qu'**une vis est prévue pour la liaison par vissage entre la partie bride (1, 3) et la partie déflectrice (7), vis qui entre en contact avec la partie bride (1,3), en particulier par sa tête de vis ou par un écrou pouvant être vissé sur le filetage de la vis, et qui est vissée dans la pièce filetée, en particulier dans un filetage intérieur (21) de la pièce filetée, et la pièce filetée est vissée dans la partie déflectrice (7).

3. Moteur électrique selon au moins une des revendications précédentes, **caractérisé en ce qu'**une vis est prévue pour la liaison par vissage entre la partie déflectrice (7) et la partie carter, vis qui entre en contact avec la partie déflectrice (7), en particulier par sa tête de vis, et qui et vissée dans la partie carter.

4. Moteur électrique selon au moins une des revendications précédentes, **caractérisé en ce que** la vis de la liaison par vissage entre la partie déflectrice (7) et la partie carter est vissée dans un filetage qui est entaillé dans la paroi intérieure d'un évidement (11, 161) qui traverse axialement la partie carter.

5. Moteur électrique selon au moins une des revendications précédentes, **caractérisé en ce que** la partie carter est une pièce réalisée par coulée continue, en particulier une pièce réalisée par coulée continue et réusinée.

6. Moteur électrique selon au moins une des revendications précédentes, **caractérisé en ce qu'**un joint d'étanchéité (23), en particulier un joint d'étanchéité plat, est disposé entre la partie déflectrice (7) et la partie carter.

7. Moteur électrique selon au moins une des revendications précédentes, **caractérisé en ce que** la pièce filetée est une douille filetée (6, 16) qui présente un filetage intérieur (21) et un filetage extérieur (22),
sachant en particulier que la douille filetée (6, 16) présente une interface pour l'application d'un outil, permettant ainsi un serrage,
sachant en particulier que l'interface est un six pans creux.

8. Moteur électrique selon au moins une des revendications précédentes, **caractérisé en ce que** la partie carter présente des canaux de refroidissement, en particulier plusieurs canaux de refroidissement s'étendant de manière traversante en direction axiale.

9. Moteur électrique selon au moins une des revendications précédentes, **caractérisé en ce que** la partie déflectrice (7) présente des régions déflectrices (30, 43, 46, 49, 50, 91, 92, 93, 94), une région d'entrée (90) et/ou une région de sortie (51) pour le réfrigérant (9, 17),
sachant en particulier qu'un dispositif de raccordement est disposé sur la partie déflectrice (7) afin d'introduire ou d'évacuer du réfrigérant (9, 17).

10. Moteur électrique selon au moins une des revendications précédentes, **caractérisé en ce que** la pièce filetée entre en contact avec la partie bride (1, 3), sachant en particulier qu'une tête de vis ou un écrou entre en contact avec la pièce filetée.

11. Moteur électrique selon au moins une des revendications précédentes, **caractérisé en ce qu'**une autre partie bride (1, 3), recevant un premier palier (18, 19) pour le montage de l'arbre de rotor (20), est reliée par l'intermédiaire d'une liaison par vissage correspondante, comprenant une pièce filetée, à une autre partie déflectrice (15), qui est disposée entre l'autre partie bride (1, 3) et la partie carter et est reliée à la partie carter au moyen d'une liaison par vissage.

12. Moteur électrique selon au moins une des revendications précédentes, **caractérisé en ce qu'**une partie déflectrice (7) est fabriquée sous forme de pièce réalisée par coulée continue, en particulier de sorte que tous les évidements (11, 161) sont axialement traversants,
et/ou **en ce qu'**un joint d'étanchéité (23), en particulier un joint d'étanchéité plat, est disposé entre chaque partie déflectrice (7, 15) et la partie bride respective (1, 3) reliée au moyen d'une liaison par vissage.

13. Jeu de pièces détachées pour fabriquer au choix deux moteurs électriques,
sachant que le premier moteur électrique présente une partie carter recevant l'empilage de tôles de stator (12),
sachant que le deuxième moteur électrique est un moteur électrique selon l'une des revendications précédentes, qui présente une partie carter recevant l'empilage de tôles de stator (12) et présentant des canaux de refroidissement,
**caractérisé en ce que** le premier moteur électrique présente une partie carter à laquelle est reliée par vissage une partie bride (1, 3) qui présente un premier palier (18, 19) pour le montage de l'arbre de rotor (20) du deuxième moteur électrique, sachant qu'une vis vissée dans la partie carter entre en contact avec la partie bride (1, 3), et en particulier la presse contre la partie carter,
sachant que le deuxième moteur électrique présente une partie bride (1, 3) semblable, en particulier identique, et une vis semblable, en particulier identique, qui entre en contact avec la partie bride (1, 3) et est vissée dans une pièce filetée qui est vissée dans une partie déflectrice (7) destinée à dévier un flux de réfrigérant,
laquelle est reliée à une partie carter du deuxième moteur électrique,
sachant en particulier que la longueur axiale de la partie carter du premier moteur est égale à la longueur axiale que présente l'unité, en particulier la partie carter de stator, qui est formée de la partie carter du deuxième moteur et des parties déflectrices (7, 15) reliées par vissage à la partie carter du deuxième moteur.

14. Jeu de pièces détachées selon la revendication 13, **caractérisé en ce que** les parties carter du premier et du deuxième moteur sont fabriquées à partir du même profilé de coulée continue, en particulier présentent la même section.

15. Procédé de fabrication de deux moteurs électriques à partir d'un jeu de pièces détachées selon la revendication 13,
sachant que des parties bride (1, 3) sont respectivement reliées à une partie carter de stator,
**caractérisé en ce que**
au choix
- pour la fabrication du premier moteur, une partie carter de stator recevant l'empilage de tôles de stator (12) est réalisée d'un seul tenant,
- pour la fabrication du deuxième moteur, la partie carter de stator est composée de deux parties déflectrices (7, 15) destinées à dévier un flux de réfrigérant et d'une partie carter redevant l'empilage de tôles de stator (12), sachant en particulier que chaque partie déflectrice (7, 15) est reliée à la partie carter au moyen de liaisons par vissage et qu'au moins une des parties déflectrices (7, 15) présente un dispositif de raccordement pour une alimentation de réfrigérant ou une évacuation de réfrigérant.
